(19) Europäisches Patentamt

European Patent Office

Office européen des brevets

(11) **EP 4 703 948 A1**

(12) **EUROPEAN PATENT APPLICATION**

(43) Date of publication:
04.03.2026 Bulletin 2026/10

(21) Application number: 24197242.1

(22) Date of filing: 29.08.2024

(51) International Patent Classification (IPC):
$G06F\ 30/12^{(2020.01)}$    $G06F\ 30/13^{(2020.01)}$
$G06F\ 30/27^{(2020.01)}$    $G06F\ 30/28^{(2020.01)}$
$G06F\ 113/08^{(2020.01)}$    $G06F\ 119/08^{(2020.01)}$

(52) Cooperative Patent Classification (CPC):
G06F 30/28; G06F 30/12; G06F 30/13; G06F 30/27;
G06F 2113/08; G06F 2119/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **KUMAR, Palani**
**560076 Bangalore, Karnataka (IN)**
• **NATH, Ayan**
**700075 Kolkata, West Bengal (IN)**
• **RAMANATH, Vinay**
**560070 Bengaluru, Karnataka (IN)**

(74) Representative: **HKW Intellectual Property PartG mbB**
**Theresienhöhe 12**
**80339 München (DE)**

(54) **SYSTEM AND METHOD TO ASSESS COVERAGE OF INPUT FLOW SOURCES IN AN INDUSTRIAL METAVERSE ENVIRONMENT**

(57) A computer-implemented method (500) to assess the coverage of input flow sources in a simulation environment is disclosed. The method (500) comprises generating, (502) flow vectors across plurality of surfaces of the simulation environment associated with predefined parameters. Further, the method (500) comprises running, (504) a flow of the fluid to simulate the flowing rates of the fluid within the simulation environment to define passive scalar functions for each zone of influence of each of a plurality of inlets within the simulation environment. Further, the method (500) comprises predicting, (506) coverage of the plurality of inlets based on simulated flowing rates of the fluid and defined passive scalar functions for each zone of influence of the plurality of inlets within the simulation environment. Further, the method (500) comprises plotting, (508) a coverage function to visualize each zone of influence of each of the plurality of inlets based on the predicted coverage.

**FIG. 5**

**Description**

The present invention generally relates to computational fluid dynamics (CFD), and more particularly relates to systems and methods for assessing the coverage of input flow sources in a simulation environment.

In industrial applications and fluid dynamics applications, assessing and visualizing the coverage of different flow sources accurately within a simulation domain is critical. Currently, computational fluid dynamics (CFD) techniques involve complex and time-consuming simulations. For simple geometries with mesh under a million cells, the CFD takes a few hours to run. For complex geometries with a mesh of over a hundred million cells, the simulation takes more than a day with low-fidelity models and up to a month with high-fidelity models. Additionally, when the CFD consists of identifying coverage of different inlets in the simulation domain, a designer currently must follow a manual post-processing step, which is often repetitive and time-consuming.

Currently, in most industrial use cases, the CFD is usually performed by two methods to analyze a flow field. The first method includes creating streamlines in the flow field to visualize the path taken by fluids that enter the domain through multiple inlets. The second method includes Lagrangian particle tracking approach, where particles are injected from various locations and tracked along the flow direction to the flow field. This is a numerical technique developed to replicate particle-imaging techniques to visualize fluid motion in experiments. In both the aforementioned methods, there are significant gaps that need to be addressed. Firstly, both methods are associated with additional steps after simulations are completed. Also, there is a need for multiple iterations in deciding the number of streamlines/particles and deciding points of injection or inlets. Furthermore, to cover the entire simulation domain, the number of streamlines or particles must be increased by several orders of magnitude, and this becomes computationally prohibitive.

There are several industrial situations where fluids are injected from multiple inlets into a common area. Some examples include liquid fuel being injected from multiple inlets into combustors, mixing of different fluids in process industries, gaseous flues injected at different stages into a combustion chamber in a gas turbine engine, multiple air conditioning vents for the cooling ambiance of different spaces ranging from a car cabin to trains and large building rooms, inert gases dumped into a data center in gas-based fire extinguishers, industrial fans/vents evacuating hot air from a shop floor, water injected from multiple inlets into a rocket booster at the end of the static test, exhaust gases from cars moving inside a tunnel or parking lot, treated water from different treatment plants mixing with a natural reservoir or a river, and pollutants from chimneys flowing through a neighborhood residential area.

The examples are sorted in the increasing order of size of the domain/product. A lot of CFD analysis is usually done in the above examples. Also, the designer optimizes the design using tools, such as a hierarchical evolutionary engineering design system (HEEDS) and generating massive amounts of data.

Often, the volume into which the fluids are injected is quite complex, and hence there always remains some part of this volume which is either over-covered or under-covered. For example, there can be places inside a room that are not cooled enough or over-cooled, or there can be places inside an engine where fuel-air are not mixed well resulting in hot spots and producing more emissions.

Accordingly, there is a need for a system and a method to overcome the above-identified issues.

Therefore, it is an object of the present invention to provide a computer-implemented system, and a computer-implemented method for assessing the coverage of input flow sources with real-time, immersive and collaborative decision-making process in a simulation environment.

Throughout the present disclosure, the term "simulation environment", "industrial metaverse environment", and "simulated environment" as used herein interchangeably refers to an extended reality (ER) environment that is designed to assess operational extent of flow inlets within an enclosed space. The ER environment corresponds to an augmented reality or a virtual reality (AR/VR) that is simulated for the enclosed spaced or an open space, in some examples, and is visualized over a user equipment (UE). The industrial metaverse environment or the simulation environment is a platform where a design of experiments (DoE) is set up with multiple parameters that are varied.

Throughout the present disclosure, the term "input flow sources" or "flow sources" as used herein refers to fluids that are supplied to the enclosed space of the simulation environment through different inlets. The input flow sources include a fluid, for example, liquid or gas, that is supplied to the enclosed space through the inlets to fulfill a purpose of as defined for such fluid. For example, liquid fuel being injected from multiple inlets into combustors, mixing of different fluids in process industries, gaseous fuels injected at different stages into a combustion chamber in gas turbine engines, multiple air conditioning vents for cooling ambience of different spaces ranging from a car cabin to trains and large building rooms, inert gases dumped into a data centre in gas-based fire extinguishers, industrial fans/vents evacuating hot air from a shop floor, water injected from multiple inlets into a rocket booster at the end of static test, exhaust gases from cars moving inside a tunnel or parking lot, treated water from different treatment plants mixing with a natural reservoir or a river, pollutants from chimneys flowing through a neighbourhood residential area.

Throughout the present disclosure, the term "flow vectors" or "plurality of flow vectors" as used herein interchangeably refers to fluid flow vectors depicting a direction of fluid flowing from the multiple inlets into the enclosed space. The flow vectors illustrate the flow of the flow across plurality of surfaces within the enclosed space and indicate a complex flow pattern even in an empty space. The flow vectors of the present disclosure also correspond to velocity vectors showing fluid flow with respect to time across the plurality of surfaces of the enclosed space. The flow vectors are computed across the plurality of surfaces of the simulation environment associated with the parameters. The flow vectors indicate flow patterns from the inlets to the outlets of the enclosed space.

Throughout the present disclosure, the term "plurality of orthogonal planes" or "plurality of surfaces" as used herein interchangeably refers to planar or nonplanar surfaces depicting flow of fluid between the inlets and outlets inside the enclosed space. The plurality of surfaces are imaginary planes drawing between walls of the enclosed space. The plurality of surfaces depict transfer of the fluid or coverage of the inlets for distribution of the fluid. The plurality of surfaces may be inclined or orthogonal surfaces or planes. The plurality of surfaces are nonplanar surfaces and is selected based on requirement.

Throughout the present disclosure, the term "passive scalars" or "scalars" or "passive scalar ratio" as used herein interchangeably refers to a scalar quantity that is used to model propagation of species like smoke from a burning car in a garage, transport of oxygen within a water flow, or the diffusion of dust or pollutants in a tunnel. Another possible application of passive scalars is to model the mean age of a fluid, for example, air freshness analysis in a meeting room. The passive scalars are developed to understand turbulence in flow fields. The passive scalars are also used in commercial simulation software for mixing studies and for modelling the mean age of a fluid in the domain or air freshness analysis. The passive scalars while splitting a domain, e.g., the enclosed space, computes a fraction in addition to assigning a threshold to each of the fractions. The passive scalars solve additional scalar transport equations and one passive scalar for each inlet helps in splitting the simulation environment for efficient analysis. At the end of the simulation, the result of each passive scalar for each inlet in the simulation domain is computed.

Throughout the present disclosure, the term "zone of influence" as used herein refers to a space within the enclosed space that is covered by an inlet. The zone of influence is a virtual space of the enclosed space that is defined by the passive scalars for each inlet separately. For example, the enclosed space, i.e., the room has three inlets, and each inlet is supposed to cover a specific portion or section of the room and therefore, the specific portion is referred to as the zone of influence. The zones of influence are defined using passive scalar fields for each of the multiple inlets.

Throughout the present disclosure, the term "coverage" as used herein refers to the capacity of the multiple inlets to supply fluid inside the enclosed space. The coverage of each inlet to supply fluid and cover each section of the enclosed space is predicted based on simulated flowing rates of the fluid and defined passive scalar functions for each zone of influence of the multiple inlets within the simulation environment/enclosed space.

Throughout the present disclosure, the term "threshold" or "predefined threshold" as used herein refers to a value that is evaluated or assumed for each zone of influence from a corresponding inlet. The threshold for each zone of influence varies based on the fluid flowing through the inlets and outlets. The threshold varies based on parameters involved with the problem being analyzed. For analyzing the fluid flow field in a room, the threshold varies based on dimensions of a room, flowing rates through individual inlets, temperature at these inlets, position of inlets, position of outlets, amount of furniture inside the room, position of the furniture, size of the furniture, number of people occupying the room.

Throughout the present disclosure, the term "machine learning (ML) surrogate model" as used herein refers to an artificial intelligence and machine learning based virtual model that makes predictions for the fluid flow within the enclosed space based on inputs or parameters.

Throughout the present disclosure, the term "user" as used herein refers to a human interacting with the system for monitoring or being monitored.

The objective oof the present invention is achieved by a computer-implemented method to assess the coverage of input flow sources in a simulation environment. In an advantageous aspect of the present disclosure, the computer-implemented method provides an elegant and an easier way for making design decisions related to understanding how different physical and operational parameters affect the coverage of different flow inlets in a region of interest.

The method comprises generating, by a processor, a plurality of flow vectors across one or more plurality of surfaces of the simulation environment associated with a plurality of predefined parameters. The plurality of predefined parameters is indicative of zones of influence defined for a plurality of inlets and a plurality of outlets and is further indicative of flow rates of a fluid through each of the plurality of inlets and outlets. The zones of influence are defined using passive scalar function for each of the plurality of inlets. The plurality of flow vectors indicates a plurality of flow patterns from the plurality of inlets to the plurality of outlets. The plurality of predefined parameters include one or more of dimensions of the simulation environment, flowing rates of the fluid through individual inlets, temperature at the plurality of inlets, positions of each of the plurality of inlets, positions of each of the plurality of outlets, an amount of space occupied by objects interacting with air flow or temperature inside the room, position of a furniture, size of the furniture, and a number of people occupying the room.

The method further comprises executing a computational fluid dynamics (CFD) model/a simulation model or to run a flow of the fluid to simulate the flowing rates of the fluid within the simulation environment to define passive scalar functions for each zone of influence of each of the plurality of inlets within the simulation environment.

Further, the method comprises predicting a coverage metric of the plurality of inlets based on simulated flow rates of the fluid and defined passive scalar functions for each zone of influence of the plurality of inlets within the simulation environment.

Still, further, the method comprises plotting a coverage function on a display device to visualize each zone of influence of each of the plurality of inlets based on the predicted coverage.

In an embodiment, the plotted coverage function is analysed to identify the zones of influence of each of the plurality of inlets. Further, plurality of predefined parameters is modified based on the analysis to optimize coverage.

In an embodiment, the analysis of the plotted coverage function varies depending on situation. For instance, the coverage function defines the zone of influence provided by a threshold in the passive scalar ratio. Therefore, the coverage function represents a volume in the enclosed space where the influence of a specific inlet is dominant compared to others. In an embodiment, the computer-implemented method comprises identifying a first region of interest and a second region of interest within the simulation environment. The number of the inlets of the plurality of inlets in the first region of interest is more than a predefined threshold. The number of the inlets of the plurality of inlets in the second region of interest is less than the predefined threshold.

In an embodiment, the computer-implemented method comprises building a deep learning (DL) surrogate model based on training by feeding the plurality of predefined parameters indicative of the simulated flow rates of the fluid and defined passive scalar functions for each zone of influence within the simulation environment. Further, the method comprises generating, by the DL surrogate model, predictions for the plurality of predefined parameters within the simulation environment. The DL surrogate model is constructed based on three step procedure, i.e., training, validating, and testing of the DL surrogate model. The construction of the DL surrogate model involves a series of simulations to be performed for each step of the construction procedure.

In an embodiment, the computer-implemented method comprises validating the generated predictions from the DL surrogate model, against one or more additional simulations of the flow to visualize coverage of the plurality of inlets and flowing rates of the fluid within the simulation environment.

In an embodiment, the computer-implemented method comprises testing, by evaluating a performance of the DL surrogate model against one or more additional simulations of the flow, to visualize coverage of the plurality of inlets and flowing rates of the fluid within the simulation environment. In an embodiment, the computer-implemented method comprises plotting the coverage function in an extended reality (ER) environment for an immersive analysis to facilitate interaction of users with the DL surrogate model and view the zones of influence in three-dimension (3D).

In an embodiment, the computer-implemented method comprises training the DL surrogate model to predict the effects of modifying orientation and dimensions of each of the plurality of inlets in real time.

The disclosed method allows an easier way of making design decisions related to understanding how different physical and operational parameters affect the coverage of different flow inlets in the region of interest. The disclosed method aims to provide a mechanism to identify the coverage from various fluid flow inlets in the simulation domain in real time. The decision-making process is real-time, immersive, and collaborative in the simulation environment.

According to another embodiment, a system is arranged and configured to execute the steps of the computer-implemented method.

According to another embodiment of the present invention, a computer program product is disclosed. The computer program product has machine-readable instructions stored therein, that when executed by one or more processors, cause the one or more processors to perform one or more methods, as discussed throughout the present disclosure.

According to another embodiment of the present invention, a non-transitory computer-readable medium is disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail in the accompanying drawings.

These and other features, aspects, and advantages of the present invention will become better understood when the following detailed description is read with reference to the accompanying drawings in which like characters represent like parts throughout the drawings, wherein:

FIG. 1 illustrates a flow diagram of a system to assess the coverage of input flow sources in a simulation environment, according to an embodiment of the present invention;

FIG. 2 illustrates an image depicting an exemplary scenario of a velocity vector across different planes in a room, according to an embodiment of the present invention;

FIGS. 3a-3c illustrate images depicting three exemplary scenarios of the coverage of the input flow sources at three inlets, according to an embodiment of the present invention;

FIG. 4 illustrates a pictorial representation of the simulation environment depicting a slider bar for inputs to make predictions through a deep learning (DL) based surrogate model, according to an embodiment of the present invention; and

FIG. 5 illustrates a flowchart depicting a method for assessing the coverage of input flow sources in the simulation environment, according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

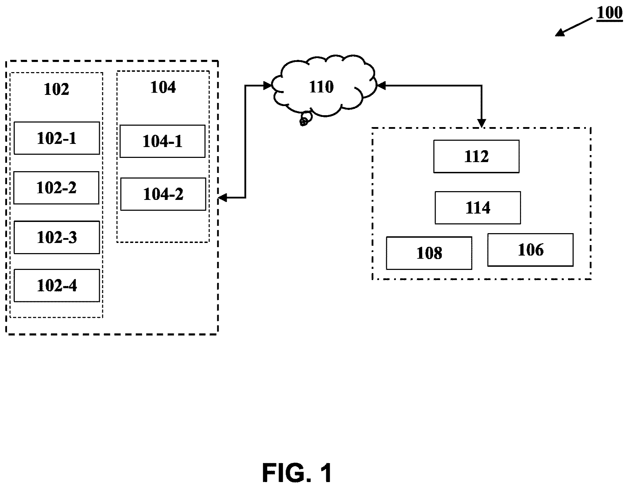

FIG. 1 illustrates a flow diagram of a system 100 to assess the coverage of input flow sources in a simulation environment, according to an embodiment of the present invention.

The system 100 includes an imaging device 102, one or more sensors 104, and a computational fluid dynamic (CFD) model 106. The imaging device 102 includes at least one of a red-green-blue (RGB) camera 102-1, a RGB depth (RGBD) camera 102-2, a stereo camera 102-3, and other cameras 102-4. The one or more sensors 104 may include, but are not limited to, an infrared (IR) depth sensor 104-1 and an indoor LiDAR sensor 104-2. The system 100 may include one or more processors 108 communicatively coupled to the imaging device 102 and the one or more sensors 104 through a communication channel or a network 110.In an embodiment, the system 100 along with the imaging device 102, the one or more sensors 104 and the CFD model 106 may be employed in an augment reality (AR) environment. The system 100 in the AR environment may be configured to visualize simulated results by superimposing the results on the real world. In another embodiment, the system 100 when employed in a virtual reality (VR) environment does not require the imaging device 102.

The system 100 is configured to provide an easier way for making design decisions related to understanding how different physical and operational parameters affect the coverage of different flow inlets in the region of interest. The system 100 provides a methodology to identify the coverage from various fluid flow inlets, e.g., a plurality of inlets, in the simulation environment in real-time.

The system 100 in some cases, is installed within environments with fluid flowing in and out of the enclosed space and is adapted to scan using the imaging device 102 an environment at once to predict the coverage of inlets for optimal fluid flow. In an embodiment, the environments, simulation environment, industrial metaverse environment are same and these terms are used interchangeably throughout the disclosure. In an embodiment, the fluid is in the form of liquid or gas that is supplied through the multiple inlets into the enclosed space. For example, liquid fuel being injected from multiple inlets into combustors, mixing of different fluids in process industries, gaseous fuels injected at different stages into a combustion chamber in gas turbine engines, multiple air conditioning vents for cooling ambience of different spaces ranging from a car cabin to trains and large building rooms, inert gases dumped into a data center in gas-based fire extinguishers. Further, examples include, industrial fans/vents evacuating hot air from a shop floor, water injected from multiple inlets into a rocket booster at the end of static test, exhaust gases from cars moving inside a tunnel or parking lot, treated water from different treatment plants mixing with a natural reservoir or a river, pollutants from chimneys flowing through a neighborhood residential area.

The system 100, through the one or more processors 108, is configured to perform a computer-implemented method to assess the coverage of input flow sources in the simulation environment. In an embodiment, the input flow sources correspond to location of the plurality of inlets and fluid flow rate through the plurality of inlets. The coverage of each of the plurality of inlets may vary depending upon the location and the fluid flow rate. The one or more processors 108 are operationally coupled to a memory 112 that is configured to store instructions which are executed by the one or more processors 108 to perform the computer-implemented method disclosed herein. Hereinafter, the one or more processors 108 are referred to as a processor 108.

As a non-limiting example, the processor 108 is a single processing unit or a set of units each including multiple computing units. The processor 108 is implemented as one or more microprocessors, microcomputers, microcontrollers, digital signal processors, central processing units, state machines, logic circuitries, and/or any devices that manipulate signals based on operational instructions (computer-readable instructions) stored in the memory 112. Among other capabilities, the processor 108 is configured to fetch and execute computer-readable instructions and data stored in the memory 112. The processor 108 includes one or a plurality of processors. The plurality of processors is further implemented as a general-purpose processor, such as a central processing unit (CPU), an application processor (AP), or the like, a graphics-only processing unit, such as a graphics processing unit (GPU), a visual processing unit (VPU), and/or an AI-dedicated processor such as a neural processing unit (NPU). The plurality of processors controls the processing of the input data in accordance with a predefined operating rule or an artificial intelligence (AI) model stored in the memory 112. The predefined operating rule or the AI model is provided through training or learning.

The processor 108 is disposed in communication with one or more input/output (I/O) devices via an Input/Output (I/O) interface. The I/O interface employs communication code-division multiple access (CDMA), high-speed packet access (HSPA+), global systems for mobile communications (GSM), long-term evolution (LTE), WiMax, or the like, etc. In another embodiment of the present disclosure, the I/O interface employs ethernet, industrial wireless Local Area Network (LAN), Process Field Bus (PROFIBUS), Actuator Sensor (AS) Interface, and the like.

In some embodiments, the memory 112 is communicatively coupled to the processor 108. The memory 112 is configured to store instructions executable by the processor 108. In one embodiment, the memory 112 communicates via a bus within the system 100. The memory 112 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the processor 108. In alternative examples, the memory 112 is separate from the one or more processors 108, such as a cache memory of a processor, the system memory, or other memory. The memory 112 is an external storage device or a database for storing data. The memory 112 is operable to store instructions executable by the one or more processors 108. The functions, acts, or tasks illustrated in the figures or described are performed by the programmed processor for executing the instructions stored in the memory 112. The functions, acts, or tasks are independent of the particular type of instruction set, storage media, processor, or processing strategy and is performed by software, hardware, integrated circuits, firmware, micro-code, and the like, operating alone or in combination. Likewise, processing strategies include multiprocessing, multitasking, parallel processing, and the like.

The memory 112 includes a database 114 to store data. Further, the memory 112 includes an operating system for performing one or more tasks of the system 100, as performed by a generic operating system. In one embodiment, the database 114 is configured to store the information as required by the one or more processors 108 to perform one or more functions for managing computing resources for the workload. In a non-limiting example, the database 114 is provided through the cloud storage, and the processor 108 are integrated with an electronic device.

The processor 108 generates a plurality of flow vectors across one or more plurality of surfaces of the simulation environment associated with a plurality of predefined parameters. In some embodiments, the plurality of parameters is indicative of zones of influence defined for a plurality of inlets and a plurality of outlets. Further, the plurality of parameters is indicative of the flowing rates of a fluid through each of the plurality of inlets and outlets. The plurality of flow vectors may indicate a plurality of flow patterns from the plurality of inlets to the plurality of outlets. The plurality of inlets and outlets correspond to inlets of the enclosed space or openings through which the fluid is supplied into the enclosed space. As mentioned above, air/fuel mixture supplied to the combustor of the engine, cool air suppled to a room through ventilation ducts, etc. Similarly, the plurality of outlets refers to openings that is adapted to supply fluid out of the enclosed space, for example, exhaust pipe connected to the engine for supplying combusted fluid out of the engine.

Further, the processor 108 executes the CFD model 106 for a flow of fluid to simulate the flowing rates of the fluid within the simulation environment to define passive scalar functions for each zone of influence of each of the plurality of inlets within the simulation environment. In an embodiment, the zone of influence is defined as a space within the enclosed space that is covered by an inlet. The zone of influence is a virtual space of the enclosed space that is defined by the passive scalars for each inlet separately. For example, the enclosed space, i.e., the room has three inlets, and each inlet is supposed to cover a specific portion or section of the room and therefore, the specific portion is referred to as the zone of influence. The zones of influence are defined using passive scalar fields for each of the multiple inlets.

Further, the processor 108 is configured to predict a coverage metric of the plurality of inlets based on simulated flow rates of the fluid and defined passive scalar functions for each zone of influence of the plurality of inlets within the simulation environment. Further, the processor 108 is configured to plot a coverage function to visualize each zone of influence of each of the plurality of inlets based on the predicted coverage.

The processor 108 analyses the plotted coverage function to identify the zones of influence of each of the plurality of inlets. Further, the processor 108 is configured to modify the plurality of predefined parameters based on the analysis to optimize coverage. In some embodiments, the plurality of predefined parameters include one or more of dimensions of the simulation environment, flowing rates of the fluid through individual inlets, temperature at the plurality of inlets, positions of each of the plurality of inlets, positions of each of the plurality of outlets, an amount of space occupied by objects interacting with airflow or temperature inside the room, position of a furniture, size of the furniture, and a number of people occupying the room. In some embodiments, the zones of influence are defined using passive scalar fields for each of the plurality of inlets.

Further, the processor 108 identifies a first region of interest and a second region of interest within the simulation environment. In some embodiments, the number of the inlets of the plurality of inlets in the first region of interest is more than a predefined threshold. In some embodiments, the number of the inlets of the plurality of inlets in the second region of interest is less than the predefined threshold.

Further, the processor 108 builds a deep learning (DL) surrogate model based on training by feeding the plurality of predefined parameters indicative of the simulated flow rates of the fluid and defined passive scalar functions for each zone of influence within the simulation environment. In an embodiment, the DL surrogate model is referred to as the CFD model 106 and is used interchangeably.

In an embodiment, the DL surrogate model 106 is constructed based on three step procedure, i.e., training, validating, and testing of the DL surrogate model 106. The construction of the DL surrogate model 106 involves a series of simulations to be performed for each step of the construction procedure.

In some embodiments, the trained, validated and tested DL surrogate model 106 is configured to generate predictions for the plurality of predefined parameters within the simulation environment. In an embodiment, the predictions, for example, include tracing back a source of regions of interest, e.g., an undercooled location or overcooled location of a room. The predictions provide a design solution such that an optimized design generated in any industrial metaverse environment or in real environments.

In some embodiment, the generated predictions from the DL surrogate model 106 are validated against one or more additional simulations of the flow to visualize coverage of the plurality of inlets and flow rates of the fluid within the simulation environment.

Further, the processor 108 is configured to plot the coverage function in an extended reality (ER) environment/-device for an immersive analysis to facilitate the interaction of users with the DL surrogate model 106 and view the zones of influence in three-dimensional (3D). In some embodiments, the DL surrogate model 106 is trained to predict the effects of modifying the orientation and dimensions of each of the plurality of inlets in real-time.

In an embodiment, a series of simulations may be performed. The series of simulations vary in the input parameters, such as, fluid flow rates at the plurality of inlets, number of inlets, location of the plurality of inlets, size of the enclosed space, e.g., a room, etc. Further, the series of simulations predict the fluid flow that is used to construct a DL model, and the DL model is trained, validated or tested based on the predicted fluid flow. In an exemplary embodiment, the DL model is constructed based a specific size of the enclosed space. Further, the hyperparameters of the DL model is tuned accordingly. Further, the DL model after validated and tested is referred to as the DL surrogate model 106 or a surrogate model, that is configured to provide inferences in the simulation environment at near real-time for different input parameters.

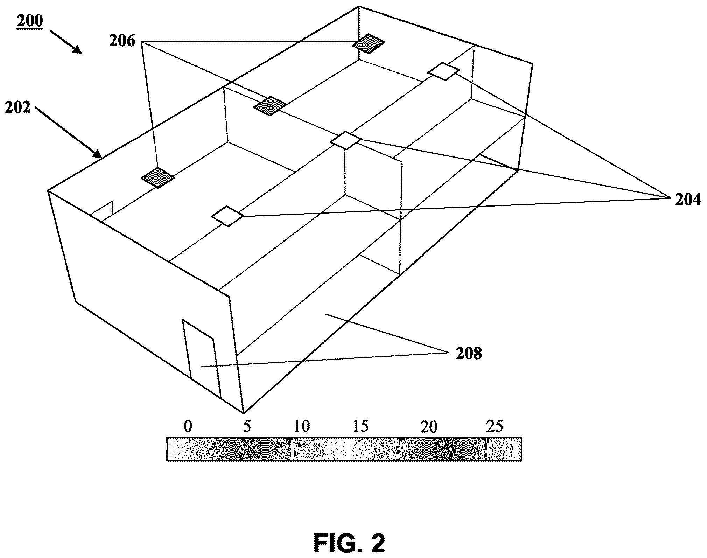

FIG. 2 illustrates an image 200 depicting an exemplary scenario of velocity vector across different planes in a room 202, according to an embodiment of the present invention. In an embodiment, the room 202 may correspond to the simulation environment or the enclosed space or the industrial metaverse environment or the domain. For the sake of brevity, the room 202 may be used hereinafter. In some exemplary embodiment, the room 202 is an enclosed space with walls and doors. The plurality of inlets 204 or referred to as inlet vents is provided for cooling air to enter the room 202 and the plurality of outlets 206 also referred to as outlet vents is provided for extracting warm air from the room 202. The velocity vectors is shown across one or more plurality of surfaces 208, e.g., three plurality of surfaces. The plurality of surfaces may indicate a complex flow pattern even inside the room 202.

The room 202 as illustrated may comprise a plurality of inlets 204 and a plurality of outlets 206. In an embodiment, the velocity vector across different planes inside the room 202 is distributed based on the flow of fluid flowing through the plurality of inlets 204. In an embodiment, the velocity vector refers to fluid flow vectors or flow vectors and are used interchangeably. The velocity vectors depict the direction of fluid flowing from the multiple inlets into the room 202. The flow vectors illustrate the flow of the flow across plurality of surfaces within the enclosed space and indicate a complex flow pattern even in an empty space. The velocity vectors depict the fluid flow with respect to time across the plurality of surfaces of the enclosed space. The flow vectors indicate flow patterns from the inlets to the outlets of the enclosed space.

In some embodiments, each of the plurality of inlets 204 is assigned with at least one passive scalar function to split the room 202 where the simulation is performed for efficient analysis. At the end of the simulation, the result of each passive scalar function is generated in real-time, in the simulation environment. In some embodiments, the passive scalar functions is used to define zones of influence for each of the plurality of inlets 204 separately. In this case, additional compute-intensive post-processing steps may not be needed at the end of the simulation to make design decisions.

As illustrated in Figure 2, the velocity vector across the one or more plurality of surfaces 208 indicate a complex flow pattern of the fluid moving from the plurality of inlets 204 across the room 202 towards the plurality of outlets 206.

In an exemplary scenario, the room 202 is filled with furniture, or people, in this case, the flow pattern of the fluid flowing inside the room 202 is complex. The DL surrogate model 106 is configured to optimize the cooling effect through each of the plurality of inlets 204 inside the room 202. The DL surrogate model 106 is configured to locate the plurality of inlets 204 in the room 202 for uniform distribution of fluid flow to achieve optimized cooling with the least expense of energy.

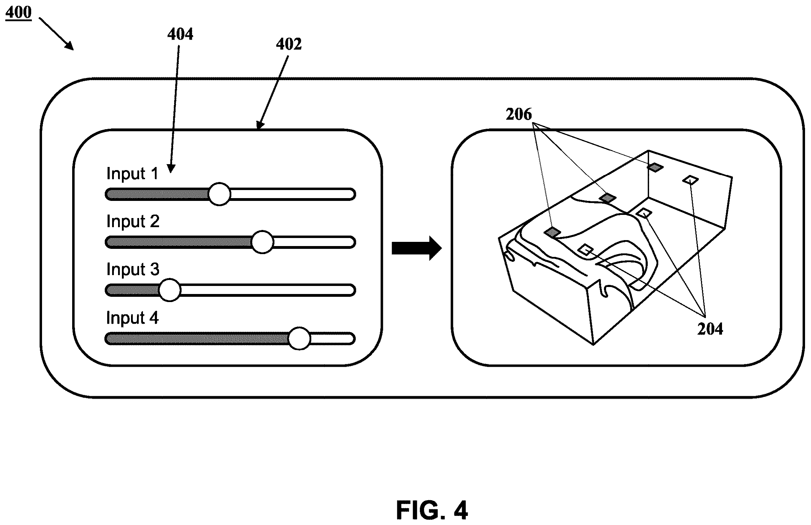

As discussed earlier, the DL surrogate model 106 is trained on the series of simulations performed. The series of simulations contains a list of input parameters, the actual values for each simulation, and the results of fluid flow inside the enclosed space for the given input values for each simulation. The input parameters comprise fluid flow rates at the plurality of inlets, number of inlets, location of the plurality of inlets, size of the enclosed space, etc. The actual values are called boundary conditions for a given simulation. In an embodiment, the DL surrogate model 106 learns the patterns and relationships between input parameters and the results of the simulations. Further, the DL surrogate model 106 is used to infer the results for a different boundary condition. In an embodiment, the boundary condition is specified by the user and the DL surrogate model 106 predicts the fluid flow for boundary condition at near real-time. The boundary condition is varied or altered by the user while setting up a design of experiment (DoE) as discussed in FIG. 4.

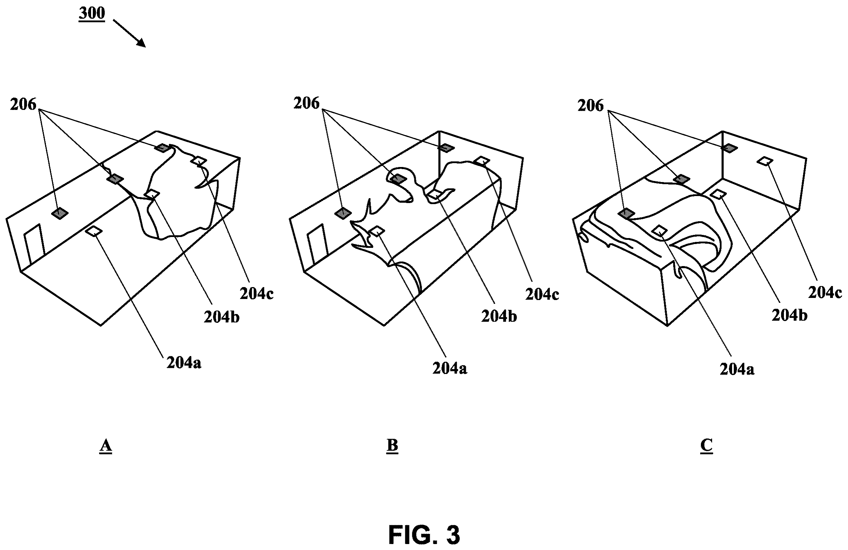

FIGS. 3a-3c illustrate images 300, 302, 304 depicting three exemplary scenarios of the coverage of the input flow sources at the plurality of inlets 204, according to an embodiment of the present invention.

In an embodiment, for each passive scalar function to identify a fraction with respect to a total space of the room 202, following equation (1) is implemented.

Let $m_i$ be the mass flow rate through inlet i and Pi be the passive scalar assigned at inlet i, then the fraction to define zone of influence $Zj$ is defined as:

$$Z_j = \frac{m_j * P_j}{\sum_{i=1}^{n} m_i * P_i} \qquad (1)$$

In some embodiments, a threshold is assumed for each zone of influence $Z_j$ and any cell that has a value higher than the threshold for a given passive scalar is evaluated to have influence from a corresponding inlet. As illustrated in FIGS. 3a-3b, the zone of influence ($Z_j > 0.5$) of three different inlets 204 in the room 202 is depicted. In an exemplary embodiment, some regions inside the room 202 positioned close to inlets, i.e., inlet 1 or inlet 3, is influenced more by inlet 2.

Referring to FIG. 3a, a region of interest is positioned close to inlet 204c is also influenced by an inlet 204b of the plurality of inlets 204. Referring to FIG. 3b, another region of interest is positioned close to inlet 204b is also influenced by inlets 204a and 204c of the plurality of inlets 204. Referring to FIG. 3c, another region of interest is positioned close to the inlet 204a is also influenced by inlet 204b of the plurality of inlets 204.

In an embodiment, the analysis of the plotted coverage function varies depending on situation. For instance, the coverage function defines the zone of influence provided by a threshold in the passive scalar ratio. Therefore, the coverage function represents a volume in the enclosed space/room 202 where the influence of a specific inlet, e.g., inlet 204b as illustrated in FIG. 3a, is dominant compared to others. In one example, to attain uniform temperature in the room 202, assuming the plurality of inlets 204 are uniformly distributed, the volume of the zones of influence needs to be similar for each of the plurality of inlets 204. The uniform distribution is either assessed visually in the AR/VR environment or exporting and plotting a bar chart from simulations.

In another example, to attain uniform temperature in the room 202 with a heat source on one side, and the temperature on that side is higher. The cooling on the side needs to be increased and that on the opposite side needs to be decreased. In an embodiment, as illustrated in FIGS. 3a-3c, visualizing the coverage function shows which inlet of the plurality of inlets, e.g., inlet 204b as illustrated in FIG. 3a, has a dominant effect on the hot side of the room and which other inlet on the cold side of the room 202. Further, the user varies either the flow rate in specific inlets or the location of specific inlets interactively until the uniform temperature objective is attained.

FIG. 4 illustrates a pictorial representation of a simulation environment 400 depicting a slider bar 402 for inputs to make predictions through the DL surrogate model 106, according to an embodiment of the present invention.

The DL surrogate model 106 is applied to the simulation environment 400 by setting up the DoE for a specific simulation. In some embodiments, the simulation environment 400 may include a plurality of inputs 404 within the slider bar 402. The plurality of inputs 404 may correspond to a plurality of parameters that is selected while setting up the DoE for the specific simulation. The plurality of parameters may include dimensions of the room 202, flowing rates through each of the plurality of inlets 204, the temperature at the plurality of inlets 204, the position of the plurality of inlets 204, the position of the plurality of outlets 206, amount of furniture inside the room 202, position of the furniture, size of the furniture, number of people occupying the room 202, etc.

Further, the plurality of parameters is set, simulations is executed, and the DL surrogate model 106 is trained on data generated by the DoE. The slider bar 402 is adapted to provide input for the DL surrogate model 106 to make real-time predictions. In some exemplary embodiments, the DoE is brought into a metaverse environment built using various off-the-shelf tools. The DL surrogate model 106 is configured to generate predictions for the plurality of inputs 404 that is viewed in the simulation environment. In an exemplary embodiment, augmented reality/virtual reality (AR/VR) technologies is utilized to view/rotate/pan/zoom into the zones of influence. In an embodiment, the DL surrogate model 106 is configured to instantly modify the location and size of the plurality of inlets 204 to ensure that the room 202 is uniformly cooled.

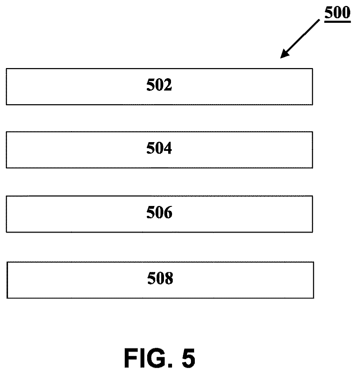

FIG. 5 illustrates a flowchart depicting a method for assessing the coverage of input flow sources in the simulation environment, according to an embodiment of the present invention. The method 500 is a computer-implemented method operated by the processor 108 of the system 100 as mentioned in conjunction with Figure 1 above. The method 500 is analogous to the operations performed by the DL surrogate model 106, as explained above.

At operation 502, the processor 108 is configured to generate the plurality of flow vectors across one or more plurality of surfaces 208 of the simulation environment 400 associated with the plurality of predefined parameters. The plurality of predefined parameters are indicative of zones of influence defined for the plurality of inlets 204 and the plurality of outlets 206 and are further indicative of flowing rates of fluid through each of the plurality of inlets 204 and outlets 206. The plurality of flow vectors indicates a plurality of flow patterns from the plurality of inlets to the plurality of outlets 206.

At operation 504, the processor 108 is configured to execute a flow of the fluid to simulate the flowing rates of the fluid within the simulation environment 400 to define the passive scalar functions for each of the zones of influence of each of the plurality of inlets 204 within the simulation environment 400.

At operation 506, the processor 108 is configured to predict coverage of the plurality of inlets 204 based on simulated flow rates of the fluid and defined passive scalar functions for each zone of influence of the plurality of inlets 204 within the simulation environment 400.

At operation 508, the processor 108 is configured to plot the coverage function on a display device to visualize each zone of influence of each of the plurality of inlets 204 based on the predicted coverage. In some exemplary embodiments, the display device may comprise, but is not limited to, a smartphone, a mobile phone, a tablet, a computer, a laptop, or any other smart user equipment's (UE).

In an embodiment, the processor 108 is configured to identify the first region of interest and the second region of interest within the simulation environment. The number of the inlets of the plurality of inlets in the first region of interest is more than a predefined threshold. The number of the inlets of the plurality of inlets in the second region of interest is less than the predefined threshold.

In an embodiment, the processor 108 is configured to build the DL surrogate model 108 based on the training by feeding the plurality of predefined parameters indicative of the simulated flowing rates of the fluid and defined passive scalar functions for each zone of influence within the simulation environment. Further, the DL surrogate model 106 predicts the plurality of predefined parameters within the simulation environment.

In an embodiment, the processor 108 is configured to validate the predicted parameters from the DL surrogate model 106, against one or more additional simulations of the flow to visualize coverage of the plurality of inlets and flowing rates of the fluid within the simulation environment.

In an embodiment, the processor 108 is configured to plot the coverage function in an extended reality (ER) device for an immersive analysis to facilitate interaction of users with the DL surrogate model and view the zones of influence in 3D. In an embodiment, the processor 108 is configured to train the DL surrogate model 106 to predict the effects of modifying orientation and dimensions of each of the plurality of inlets in real time. The DL surrogate model 106 generates predictions for different inputs that are viewed in the industrial metaverse environment. The DL surrogate model 106 may be implemented over the AR/VR device to view/rotate/pan/zoom into the zones of influence in an immersive way.

Further, the present invention also contemplates a computer program product that includes computer program code which, when executed by a computer system 100, causes the computer system 100 to carry out the method 500 as mentioned above. Further, the computer program codes are instructions that are transmitted or received over the communication channel 110 via a communication port or interface or using a bus (not shown). The communication port or interface is a part of the processor 108 or is a separate component. The communication port is created in software or is a physical connection in hardware. The communication port is configured to connect with the communication channel 110,

EP 4 703 948 A1

external media, the display, or any other components in the system 100. The connection with the communication channel 110 is a physical connection, such as a wired ethernet connection, or is established wirelessly. Likewise, the additional connections with other components of the system 100 is physical or is established wirelessly. The communication channel 110 may alternatively be directly connected to the bus. For the sake of brevity, the architecture, and standard operations of the memory 112 and the processor 108 are not discussed in detail.

Further, the present invention also contemplates a computer-readable medium comprising a computer program product comprising computer program code which, when executed by the system 100, causes the system 100 to carry out the method 500 as disclosed.

The present disclosure is adapted to detect the zones of influence or coverage from different inlets. Further, the present disclosure may detect the passive scalars for splitting a domain. The present disclosure may detect source identification of rich or lean regions and hot or cold regions inside the room or simulation environment. The present disclosure may analyze the zones of influence or coverage metric of the zones of influence.

The present disclosure provides an efficient method to split a region, e.g., the room 202, in simulations based on coverage of different inlets in a single step. The present disclosure eliminates a need for multiple steps or tuning as provided by currently available conventional methods. The present disclosed method helps to trace back the source of regions of interest, e.g., an undercooled location or overcooled location within the region. The present disclosure provides a split-domain in 3D space. The present disclosure may facilitate the splitting of the domain such that the passive scalar information may compute a fraction in addition to assigning a threshold to each of these fractions.

In an exemplary embodiment, the present disclosure offers a reduction in computational complexity of CFD simulations by integration of the DL surrogate model 106, which enables faster and more accurate predictions of the coverage of the zones of influences for different input flow sources. The present disclosure eliminates need for repeated simulations thereby saving time and computational resources.

In an exemplary embodiment, the present disclosure integrates the AR/VR technologies to provide an immersive 3D visualization of the simulation environment over the UE. This allows the users to intuitively interact with the DL surrogate model 106 and make adjustment in the plurality of predefined parameters in real-time and also visualize the effect of adjustment.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practised with modification within the scope of the embodiments as described herein.

List of Reference Numerals:

| | |
|---|---|
| System | 100 |
| Imaging Device | 102 |
| RGB Camera | 102-1 |
| RGBD Camera | 102-2 |
| Stereo Camera | 102-3 |
| Microphone Array | 102-4 |
| One or more Sensors | 104 |
| IR depth sensor | 104-1 |
| LiDAR Sensor | 104-2 |
| DL surrogate model/CFD model | 106 |
| One or more Processors | 108 |

(continued)

| | |
|---|---|
| Communication Channel | 110 |
| Memory | 112 |
| Image | 200 |
| Room | 202 |
| Plurality of Inlets | 204, 204a, 204b, 204c |
| Plurality of Outlets | 206 |
| Plurality of surfaces | 208 |
| Another Image | 300 |
| Simulation Environment | 400 |
| Slider bar | 402 |
| Plurality of Inputs | 404 |
| Method | 500 |
| Steps | 502 to 508 |

**Claims**

1. A computer-implemented method (500) to assess the coverage of input flow sources in a simulation environment, the method comprising:

    determining, (502) by a processor, a plurality of flow vectors across one or more plurality of surfaces of the simulation environment associated with a plurality of predefined parameters, wherein the plurality of predefined parameters are indicative of zones of influence defined for a plurality of inlets and a plurality of outlets and are further indicative of flowing rates of fluid through each of the plurality of inlets and outlets, and wherein the plurality of flow vectors indicate a plurality of flow patterns from the plurality of inlets to the plurality of outlets;
    performing simulations, (504) to simulate the flowing rates of the fluid within the simulation environment to define passive scalar functions for each zone of influence of each of the plurality of inlets within the simulation environment;
    predicting, (506) coverage metric of the plurality of inlets based on simulated flowing rates of the fluid and defined passive scalar functions for each zone of influence of the plurality of inlets within the simulation environment; and
    plotting, (508) a coverage function on a display device to visualize each zone of influence of each of the plurality of inlets based on the predicted coverage.

2. The computer-implemented method (500) according to claim 1, further comprising:

    analyzing the plotted coverage function to identify the zones of influence of each of the plurality of inlets; and
    modifying the plurality of predefined parameters based on the analysis to optimize coverage.

3. The computer-implemented method (500) according to any of the preceding claims, further comprising:

    identifying a first region of interest and a second region of interest within the simulation environment, wherein a number of the inlets of the plurality of inlets in the first region of interest is more than a predefined threshold, and wherein a number of the inlets of the plurality of inlets in the second region of interest is less than the predefined threshold.

4. The computer-implemented method (500) according to any of the preceding claims, wherein the plurality of predefined parameters include one or more of dimensions of the simulation environment, flowing rates of the fluid through individual inlets, temperature at the plurality of inlets, positions of each of the plurality of inlets, positions of each of the plurality of outlets, an amount of space occupied by objects interacting with air flow or temperature inside the room, position of a furniture, size of the furniture, and a number of people occupying the room.

5. The computer-implemented method (500) according to any of the preceding claims, further comprising:

    building a deep learning (DL) surrogate model based on a training by feeding the plurality of predefined parameters indicative of the simulated flowing rates of the fluid and defined passive scalar functions for each zone of influence within the simulation environment; and
predicting, by the DL surrogate model, the plurality of predefined parameters within the simulation environment.

6. The computer-implemented method (500) according to claims 1 to 5, further comprising:
validating the predicted parameters from the DL surrogate model, against one or more additional simulations of the flow to visualize coverage of the plurality of inlets and flowing rates of the fluid within the simulation environment.

7. The computer-implemented method (500) according to claims 1 to 6, further comprising:
testing, by evaluating a performance of the DL surrogate model against one or more additional simulations of the flow, to visualize coverage of the plurality of inlets and flowing rates of the fluid within the simulation environment.

8. The computer-implemented method (500) according to claims 5 to 6, further comprising:
plotting the coverage function in an extended reality (ER) device for an immersive analysis to facilitate interaction of users with the DL surrogate model and view the zones of influence in three-dimension (3D).

9. The computer-implemented method (500) according to any of preceding claims, wherein the zones of influence are defined using passive scalar functions for each of the plurality of inlets.

10. The computer-implemented method (500) according to claims 5 to 9, further comprising:
training the DL surrogate model to predict the effects of modifying orientation and dimensions of each of the plurality of inlets in real time.

11. A system (100) arranged and configured to execute the steps of the computer-implemented method (500) according to any one of the preceding claims 1 to 10.

12. A computer program product, comprising computer program code which, when executed by a computer system (100), causes the computer system (100) to carry out the method (500) of one of the claims 1 to 10.

13. A computer-readable medium comprising a computer program product comprising computer program code which, when executed by a computer system (100), causes the computer system (100) to carry out the method (500) of one of the claims 1 to 10.

FIG. 1

**FIG. 2**

300

206

204c
204b
204a

A

206

204c
204b
204a

B

206

204c
204b
204a

C

FIG. 3

**FIG. 4**

EP 4 703 948 A1

500

502

504

506

508

# FIG. 5

Europäisches
Patentamt

European
Patent Office

Office européen
des brevets

# EUROPEAN SEARCH REPORT

**Application Number**

EP 24 19 7242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANK A ET AL: "Mixing of cooling water in the mixing chambers of the HPLWR-High Performance Light Water Reactor", NUCLEAR ENGINEERING AND DESIGN, AMSTERDAM, NL, vol. 240, no. 10, 1 October 2010 (2010-10-01), pages 3248-3258, XP027355842, ISSN: 0029-5493 [retrieved on 2010-07-03] | 1-4,9, 11-13 | INV. G06F30/12 G06F30/13 G06F30/27 G06F30/28 ADD. G06F113/08 G06F119/08 |
| Y | * abstract * * page 3249 - page 3257 * ----- | 5-8,10 | |
| X | ROUAUD O ET AL: "Numerical investigation on the efficiency of transient contaminant removal from a food processing clean room using ventilation effectiveness concepts", JOURNAL OF FOOD ENGINEERING, ELSEVIER, AMSTERDAM, NL, vol. 68, no. 2, 1 May 2005 (2005-05-01), pages 163-174, XP004667328, ISSN: 0260-8774, DOI: 10.1016/J.JFOODENG.2004.05.029 | 1-4,9, 11-13 | |
| A | * abstract * * page 163 - page 173 * ----- | 5-8,10 | TECHNICAL FIELDS SEARCHED (IPC) G06F |

-/--

The present search report has been drawn up for all claims

| Place of search | Date of completion of the search | Examiner |
|---|---|---|
| Munich | 27 January 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO LIU ET AL: "Numerical simulation on the effect of jet nozzle position on impingement cooling of gas turbine blade leading edge", INTERNATIONAL JOURNAL OF HEAT AND MASS TRANSFER, ELSEVIER, AMSTERDAM, NL, vol. 54, no. 23, 4 July 2011 (2011-07-04), pages 4949-4959, XP028271613, ISSN: 0017-9310, DOI: 10.1016/J.IJHEATMASSTRANSFER.2011.07.008 [retrieved on 2011-07-08] * abstract * * page 4949 - page 4956 * ----- | 1-4,9, 11-13 | |
| Y | ALBERTO BADIAS ET AL: "An augmented reality platform for interactive aerodynamic design and analysis", 17 June 2019 (2019-06-17), INTERNATIONAL JOURNAL OF NUMERICAL METHODS IN ENGINEERING, CHICHESTER, GB, PAGE(S) 125 - 138, XP071325419, ISSN: 0029-5981 * abstract * * page 126 - page 127 * * page 133 - page 134 * ----- | 5-8,10 | |
| A | IMMONEN EERO: "CFD optimization of jet fan ventilation in a car park by fractional factorial designs and response surface methodology", BUILDING SIMULATION, TSINGHUA UNIVERSITY PRESS, HEIDELBERG, vol. 9, no. 1, 11 September 2015 (2015-09-11), pages 53-61, XP035558906, ISSN: 1996-3599, DOI: 10.1007/S12273-015-0249-0 [retrieved on 2015-09-11] * the whole document * ----- | 1-13 | TECHNICAL FIELDS SEARCHED (IPC) |

The present search report has been drawn up for all claims

| Place of search | Date of completion of the search | Examiner |
|---|---|---|
| Munich | 27 January 2025 | Radev, Boyan |

EPO FORM 1503 03.82 (P04C01)

**page 2 of 2**